# EUROPEAN PATENT APPLICATION

(11) **EP 4 613 813 A1**
(43) Date of publication of application: **10.09.2025**
(21) Application number: 23885688.4
(22) Date of filing: 27.10.2023
(51) Int. Cl.: C08L 77/00, B29B 17/00, B29B 17/02, C08G 69/46, C08J 3/11, C08J 3/14

(54) **POLYAMIDE COMPOSITION WITH LOW SILICON CONTENT AND PRODUCTION METHOD THEREFOR, FIBER, WOVEN FABRIC, AND AIRBAG**

(30) Priority: 31.10.2022 JP 2022175055; 31.10.2022 JP 2022175057
(71) Applicant: Asahi Kasei Kabushiki Kaisha, Tokyo 1000006 (JP)
(72) Inventor: YAKIGAYA Kenichi, Tokyo 100-0006 (JP); MIYATAKE Ryo, Tokyo 100-0006 (JP); OTANI Shoji, Tokyo 100-0006 (JP); YAMADA Yutaro, Tokyo 100-0006 (JP); HONDA Noko, Tokyo 100-0006 (JP); KUSUYAMA Naoyuki, Tokyo 100-0006 (JP); SATO Yusuke, Tokyo 100-0006 (JP); SHIMADA Kazumasa, Tokyo 100-0006 (JP); IDA Kosuke, Tokyo 100-0006 (JP)
(74) Representative: dompatent von Kreisler Selting Werner - Partnerschaft von Patent- und Rechtsanwälten mbB
(86) International application number: PCT/JP2023/038982
(87) International publication number: WO 2024/095932

(57) **Abstract**

According to the present disclosure, a polyamide composition that is less prone to clogging in the flow paths such as filters in a processing apparatus during melt processing such as melt spinning, and allows for long-term continuous operation of a processing apparatus can be provided. A polyamide composition is provided which is a recycled polyamide composition containing a silicon compound and having a silicon atom content as quantified by X-ray fluorescence analysis of 1000 ppm or less.

## Description

### TECHNICAL FIELD

The present disclosure relates to a polyamide composition that is less prone to clogging during melt processing and thus can continue to prevent clogging in a processing apparatus for a long time and a manufacturing method of the same, and a fiber, a woven fabric, and an airbag.

### BACKGROUND

Polyamide, including polyamide 6 and polyamide 66, which are representative engineering plastics, possesses heat resistance and excellent mechanical properties and is widely used in fibers, automotive parts, electrical product components, and the like. Polyamide is one of the indispensable materials in the modern society. Of these, polyamide 66 is particularly important because it is used in applications requiring heat resistance and durability in particularly harsh environments.

In recent years, technologies related to plastic recycling have been developed for the purposes of resource conservation and carbon neutrality, and polyamides are no exception.

Recycling is broadly classified into material recycling which involves re-pelletizing once-shaped products, and chemical recycling which reuses monomers through depolymerization. Material recycling carries concerns about unstable quality because degradation of polymers and additive components contained in shaped products remain in the recycled polymer. However, since material recycling does not involve chemical reactions and requires fewer auxiliary raw materials, it consumes fewer resources and energy. Therefore, material recycling is chosen in cases where circulation is carried out by limiting the application. Moreover, before carrying out chemical recycling, the step of recovering a clean polyamide similar to the corresponding step in material recycling is also carried out in order to remove additives and coatings from processed or used polyamide collected from factories or markets. Therefore, material recycling technology is also useful for chemical recycling.

As mentioned above, since processed or used polyamide contains various contaminants, various recovery methods need to be flexibly used according to the application. Polyamides have a wide range of applications, and one of the applications of polyamide 66 is automotive applications, which demand a high level of safety. For example, it is used in engine parts that require high heat resistance and in the airbag base fabric, which requires durability against rupture. Of these, base fabrics for airbags have minimal degradation and are suitable for material recycling. Not only used airbags but also offcuts resulting from cutting of parts during the manufacturing and sewing of base fabrics for airbags may also be recycled.

Generally, an airbag base fabric is produced by spinning polyamide 66, weaving it into a woven fabric, and coating the fabric with a silicone resin. Therefore, to material-recycle airbag base fabric, it is necessary to separate the coating from polyamide 66.

As a physical method to remove contaminants from a polyamide containing the contaminants and purify the polyamide, methods such as crushing the recovered material followed by specific gravity separation can be mentioned (PTL 1). Although this method enables separation with low energy consumption, separation is difficult in an airbag base fabric where the polyamide and contaminants are strongly bonded, mixed, adhered, or otherwise interacted.

There are other methods that partially or entirely dissolve and remove contaminants such as unwanted silicone using a solvent (e.g., PTL 2). The recovered polyamide is collected in the form of crushed fabric. Used airbags and offcuts resulting from manufacturing have various shapes, and, direct reuse in their original shape or fiber waste obtained by cutting them is difficult. Thus, melting and pelletizing are required.

Conversely, an alternative method may also be considered where the polyamide is once dissolved in a solvent, contaminants are removed as insoluble matters, and the polyamide is then precipitated and recovered by some methods. However, many solvents that dissolve polyamide are strong acids such as formic acid and sulfuric acid, or expensive solvents such as HFIP, and are not suitable for industrial use. An example use of a solvent suitable for industrial use is a dissolution recovery method using ethylene glycol (PTL 3). However, this method requires extremely high-temperature processing, raising concerns about glycolysis of the polyamide. Additionally, since the used solvent needs to be completely distilled and dried from the sherbet-like solid form, this method is considered to require a significant amount of energy along with the heating during the reaction. As a low-temperature method using commonly used raw materials, a dissolution method using an alcohol solution of calcium chloride can be mentioned. For example, PTL 4 discloses a method in which polyamide fabric coated with silicone is treated with a calcium chloride methanol solution to dissolve the polyamide, which is then diluted with a large amount of water or methanol to obtain the target polyamide as a powder.

When the polyamide regenerated from such silicone-coated polyamide was actually produced, a problem became apparent. When the recycled polyamide was attempted to be used for processes such as spinning, the filter used to remove foreign matter was immediately clogged, making continuous operation impossible. Since spinning requires continuous and stable production of products, it is necessary to use raw materials that minimize factors restricting continuous operation as much as possible.

On the other hand, when polyamide fibers are used as airbag fibers, in the production process of airbag base fabrics, the production dates of the raw yarns used within the same base fabric are generally kept as close as possible. This is problematic because when raw yarns produced on different dates with a significant production date interval are used, nonuniformity of the onset of aging-related shrinkage reduction of the fibers arises. As a result, the density of the fabric base varies, leading to appearance defects (hereinafter referred to as "weaving streaks").

### CITATION LIST

### Patent Literature

PTL 1: JP5841598B
PTL 2: JP7024037B
PTL 3: JP2018172618A
PTL 4: JP5110704B

### SUMMARY

### (Technical Problem)

The present disclosure is directed to providing a polyamide composition that is less prone to clogging of flow paths such as filters in a processing apparatus during melt processing such as melt spinning, and allows for long-term continuous operation of the processing apparatus. Furthermore, the present disclosure preferably provides a polyamide raw yarn that suppresses weaving streak defects in a base fabric without restricting the production date interval of raw yarn.

### (Solution to Problem)

Through detailed investigation of clogging during processing such as spinning, it became evident that one of the causes was a silicone resin mixed into the polyamide.

When a polyamide base fabric is coated with a silicone resin, the silicone resin penetrates and cures inside the fibers of the base fabric. Therefore, even when the silicone is peeled off, the silicone resin remaining inside the polyamide fibers persists in the regenerated polyamide.

In the polyamide recovery method using a calcium chloride methanol solution, since the polyamide is dissolved, the residual amount of silicone resin inside the polyamide fibers can be reduced. However, because the coated silicone resin is thin and fine, pieces finely cut by stirring blades, etc., are mixed in, and simply removing most of the peeled-off silicone is ineffective in sufficiently reducing the residual silicone resin in the regenerated polyamide.

As a result of intensive research to solve this issue, we have discovered a regenerated polyamide that is recovered from a silicone-coated polyamide base fabric as a raw material, and is less prone to clogging during spinning.

Additionally, through extensive research and repeated experiments, the present inventors et al. unexpectedly discovered that the content of oligomers (polyamide components with a polymerization degree of 5 or less) in fibers is crucial in suppressing aging-related shrinkage reduction of the polyamide fibers, leading to the completion of the present disclosure.

Specifically, the present disclosure is as follows.
[1] A polyamide composition comprising a silicon compound and having a silicon atom content quantified by X-ray fluorescence analysis of 1000 ppm or less.
[2] The polyamide composition according to [1], being a recycled polyamide composition.
[3] The polyamide composition according to [1] or [2], wherein the silicon atom content quantified by X-ray fluorescence analysis is 30 ppm or more and 1000 ppm or less.
[3a] The recycled polyamide composition according to any one of [1] to [3], in a powder form.
[3b] The recycled polyamide composition according to any one of [1] to [3a], used for fibers.
[4] The polyamide composition according to any one of [1] to [3b], wherein the silicon compound comprises an organosilicon compound.
[4a] The recycled polyamide composition according to any one of [1] to [4], further comprising a calcium compound, wherein a calcium atom content quantified by X-ray fluorescence analysis is 1000 ppm or less.
[4b] The recycled polyamide composition according to any one of [1] to [4b], further comprising a zinc compound, wherein a zinc atom content quantified by X-ray fluorescence analysis is 1000 ppm or less.
[5] The polyamide composition according to any one of [1] to [4], wherein a content of polyamide components with a polymerization degree of 5 or less is 10000 ppm or less.
[6] The polyamide composition according to any one of [1] to [5], wherein the polyamide comprises polyamide 66.
[7] A manufacturing method of a polyamide composition comprising dissolving a polyamide from a silicone-coated polyamide base fabric, the dissolving being carried out using a container with a structure to prevent a part that rotates by an external driving force during the dissolution from coming in contact with the silicone-coated polyamide base fabric.
[7a] The manufacturing method of the polyamide composition according to any one of [1] to [6], comprising dissolving a polyamide from a silicone-coated polyamide base fabric, wherein the dissolving is carried out using a container with a structure to prevent a part that rotates by an external driving force during the dissolution from coming in contact with the silicone-coated polyamide base fabric.
[7b] The manufacturing method of the recycled polyamide composition according to any one of [1] to [6], comprising dissolving a polyamide from a silicone-coated polyamide base fabric, wherein the dissolving is carried out using a container having a mechanism for continuously collecting the silicone resin resulting from the dissolution.
[8] The manufacturing method according to any one of [7] to [7b], wherein the dissolution of the polyamide is carried out using a metal chloride alcohol solution.
[8a] The manufacturing method according to [8], wherein the metal chloride is zinc chloride or calcium chloride.
[8b] The manufacturing method according to [8a], wherein the metal chloride is calcium chloride.
[8c] The manufacturing method according to any one of [8] to [8a], wherein the alcohol is methanol.
[9] A polyamide fiber having a content of polyamide components with a polymerization degree of 5 or less of 20000 ppm or less, and a silicon atom content quantified by X-ray fluorescence analysis of 50 ppm or more and 1000 ppm or less.
[10] A polyamide fiber obtained from the polyamide composition according to any one of [1] to [6], having a content of polyamide components with a polymerization degree of 5 or less of 20000 ppm or less, and a silicon atom content quantified by X-ray fluorescence analysis of 50 ppm or more and 1000 ppm or less.
[11] The polyamide fiber according to [9] or [10], wherein tanδ in a dynamic viscoelastic measurement has no peak in a range of -50°C to +50°C and has a peak in a range of +90°C to +130°C, and a value of the peak of tanδ is 0.1 or more and 0.15 or less.
[12] The polyamide fiber according to any one of [9] to [11], being a multi-filament yarn having the following properties (1) to (7):
   (1) a total fineness of 150 dtex or more and 2500 dtex or less;
   (2) a strength of 6.0 cN/dtex or more and 11.0 cN/dtex or less;
   (3) an elongation of 15% or more and 25% or less;
   (4) a boiling water shrinkage ratio of 4.0% or more and 11.0% or less;
   (5) a finish pick-up ratio of 0.5 mass% or more and 1.5 mass% or less;
   (6) a filament count of 30 or more and 400 or less; and
   (7) a three-month shrinkage reduction ratio of 12% or less.
[13] The polyamide fiber according to any one of [9] to [12], wherein the polyamide fiber comprises a polyamide 66 fiber
[14] An airbag base fabric comprising the polyamide fiber according to any one of [9] to [13].
[15] An airbag comprising the airbag base fabric according to [14].
[16] A recycled fiber spun from the polyamide composition according to any one of [1] to [6].
[17] A recycled base fabric woven using the recycled fiber according to [16].
[18] A recycled airbag comprising the recycled base fabric according to [17].
[19] A manufacturing method of a polyamide solution, comprising:
   placing a polyamide-containing substance that comprises an insoluble component insoluble to a metal chloride alcohol solution and a polyamide, into a container with liquid passage holes made of an insoluble resin, adding the metal chloride alcohol solution comprising a metal chloride and an alcohol, stirring at 120°C or lower to dissolve the polyamide, and isolating the insoluble component inside the container.
[20] The manufacturing method according to [19], wherein the insoluble resin is one or more selected from polyethylene, polypropylene, polyurethane, polystyrene, polydimethylsiloxane, and polyester.
[21] The manufacturing method according to [19] or [20], wherein a solubility of the polyamide in the metal chloride alcohol solution is 1 wt% or more at maximum at 120°C or lower.
[22] The manufacturing method according to any one of [19] to [21], wherein the metal chloride is any one of calcium chloride, zinc chloride, and lithium chloride.
[23] The manufacturing method according to any one of [19] to [22], wherein the alcohol is methanol.
[24] The manufacturing method according to any one of [19] to [23], wherein the polyamide comprises polycaprolactam and/or polyhexamethylene adipamide.
[25] A manufacturing method of a polyamide, comprising precipitating the polyamide from the polyamide solution produced by the manufacturing method according to any one of [19] to [24].

### (Advantageous Effect)

According to the present disclosure, it is possible to provide a recycled polyamide composition that is less prone to clogging during melt spinning and allows for long-term continuous operation. Furthermore, polyamide fibers that can improve the quality of airbag base fabrics can be provided.

### DETAILED DESCRIPTION

Hereinafter, embodiments for embodying the present disclosure (hereinafter simply referred to as "embodiments") will be described.

The present disclosure relates to a polyamide composition that is less prone to clogging of flow paths such as filters in a processing apparatus during melt processing such as melt spinning, and allows for long-term continuous operation of the processing apparatus and a manufacturing method of the same.

### <Polyamide Composition>

The polyamide in the present disclosure refers to a polymer that has been polymerized through amide bonds, such as those obtained by the polycondensation of a diamine compound and a dicarboxylic acid compound, or by the ring-opening polymerization of a cyclic lactam.

The diamine compound is not particularly limited, but examples include ethylenediamine, trimethylenediamine, tetramethylenediamine, pentamethylenediamine, hexamethylenediamine, nonanediamine, methylpentanediamine, and p-phenylenediamine.

The dicarboxylic acid compound is not particularly limited, but examples include oxalic acid, glutaric acid, adipic acid, sebacic acid, terephthalic acid, and isophthalic acid.

The cyclic lactam is not particularly limited, but examples include ε-caprolactam, undecanolactam, and lauryllactam.

There is no particular limitation on the combination of the diamine compound, the dicarboxylic acid compound, and the cyclic lactam compound, and multiple types of each compound may be used in combination. The polyamide is not particularly limited but examples include those including aliphatic polyamides such as polyamide 66, polyamide 6, polyamide 11, polyamide 12, polyamide 610, polyamide 612, polyamide 46, polyamide 6T, polyamide 6I, copolymers of these, and mixtures of these. Of these, those containing aliphatic polyamides are preferable, and those containing polyamide 66 are most preferable. A polyamide containing polyamide 66 is melt-spinnable, has a high melting point with excellent heat resistance, exhibits high flexibility, and has a manageable water absorption rate, making it easy to handle.

The polyamide composition of the present disclosure contains a silicon compound. Examples of the silicon compound include organosilicon compounds used for coating the polyamide. Specifically, it includes fine particles of a silicone resin per se or organically treated silica used as a filler reinforcement material for the silicone resin.

For quantifying the silicon compounds contained in the polyamide composition, X-ray fluorescence analysis, which allows analysis regardless of whether the silicon compound is inorganic or organic, is preferably used. The specific conditions for analysis are not particularly limited, as long as conditions are used which enable accurate quantification of trace amounts of impurities contained in the polyamide composition.

The content of silicon compounds contained in the polyamide composition, expressed as the silicon atom content quantified by X-ray fluorescence analysis, is 1000 ppm or less, preferably 700 ppm or less, and more preferably 500 ppm or less. If the content of silicon compounds is high, clogging is likely to occur, making continuous operation impossible. On the other hand, it is preferably 30 ppm or more. If the content of polyamide components with a polymerization degree of 5 or less is low, fibers lose plasticity, and the stretchability is hindered. By containing 30 ppm or more of silicon atoms, uniform stretching occurs during fiber production with the silicon compound as a support, compensating for the reduction in stretchability due to the decrease in low-oligomer components.

The elements contained in the polyamide composition of the present disclosure that are not derived from silicon or the polyamide are not particularly limited, but examples include calcium and zinc (e.g., in the form of calcium compounds and zinc compounds). The content of calcium contained in the polyamide composition expressed as the calcium atom content quantified by X-ray fluorescence analysis, is preferably 1000 ppm or less, more preferably 700 ppm or less, and even more preferably 500 ppm or less. The content of zinc contained in the polyamide composition, expressed as the zinc atom content quantified by X-ray fluorescence analysis, is preferably 1000 ppm or less, more preferably 700 ppm or less, and even more preferably 500 ppm or less. Although calcium and zinc have little impact on clogging during spinning, these compounds are highly likely to absorb water. When the polyamide composition containing water is melted, hydrolysis occurs, causing a reduction in the molecular weight and a reduction in the durability of a shaped product.

The content of polyamide components with a polymerization degree of 5 or less (hereinafter sometimes referred to as "oligomers") in the polyamide composition, expressed as the content of polyamide components with a polymerization degree of 5 or less quantified by GPC analysis, is preferably 10000 ppm or less, more preferably 5000 ppm or less, even more preferably 2500 ppm or less, and most preferably 2000 ppm or less. In the present embodiment, the polymerization degree represents the number of minimum repeating unit structures constituting the polyamide, which may be repeated either linearly or cyclically. If the content of polyamide components with a polymerization degree of 5 or less is high, the mechanical strength of a product shape decreases. Therefore, the content of polyamide components with a polymerization degree of 5 or less in the polyamide composition is preferably as low as possible.

There is no particular limitation on the evaluation method for the coloration of the polyamide composition, but methods such as the Yellowness Index (hereinafter referred to as YI, ASTM E313) can be used depending on the tendency of the coloration. If the coloration is faint and close to white, methods such as the Whiteness Index (hereinafter referred to as WI, CIE Whiteness) can also be used. The coloration of the polyamide composition, when expressed using YI, for example, is preferably 20 or less, more preferably 17 or less, and most preferably 13 or less. The coloration when expressed using WI is preferably 40 or more, more preferably 50 or more, and most preferably 60 or more.

There is no particular limitation on the shape of the polyamide composition, but examples include pellets made by melting the polyamide during manufacturing (e.g., recycling) or powder made by dissolving in a solvent and then precipitating.

The content of polyamide components with a polymerization degree of 5 or less in the polyamide fiber of the present embodiment is 20000 ppm or less, preferably 10000 ppm or less, and more preferably 5000 ppm or less. When the content of polyamide components with a polymerization degree of 5 or less in the fiber is 20000 ppm or less, the mobility of the molecules in the range of low temperatures to normal temperature can be suppressed, and the three-month shrinkage reduction ratio of the raw yarn, which will be described later, can be suppressed. Melt spinning the polyamide composition increases the content of polyamide components with a polymerization degree of 5 or less in the polyamide fiber, and the content of 20000 ppm or less helps to improve the long-term stability of the shrinkage ratio of the fiber. This allows for the production of high-quality woven products even with production date intervals, and the appearance defects (weaving streaks) caused by variations of the density of the base fabric associated with nonuniformity of the onset of aging-related shrinkage reduction of the fibers can be suppressed. A fiber obtained by melt spinning has an absolute value of the amount of polyamide components with a polymerization degree of 5 or less of 100 ppm or more due to an unavoidable increase in the volume caused by heat during melting.

The content of silicon compound contained in the polyamide fiber of the present embodiment, expressed as the silicon atom content quantified by X-ray fluorescence analysis, is preferably 30 ppm or more and 1000 ppm or less, more preferably 50 ppm or more and 700 ppm or less, and even more preferably 100 ppm or more and 500 ppm or less. When the silicon compound contains 30 ppm or more of silicon atoms, uniform stretching with the silicon compound as a support is achieved, which compensates for the reduction in stretchability due to the decrease in low oligomer components. On the other hand, when the silicon compound content is 1000 ppm or less, clogging during spinning is less likely to occur, allowing for continuous operations. The silicon compound is basically derived from an organosilicon compound used in the coating of the polyamide products. Specifically, it is considered that the organic fine particles of the silicone resin per se or organically treated silica used as a filler reinforcing material for the silicone resin, which is well compatible with the polyamide, function as stretching supports by being finely and uniformly dispersed as minute solids, and improve the stretchability.

The polyamide fiber of the present embodiment preferably has no peak of tanδ in the range of -50°C to +50°C in a dynamic viscoelastic measurement. Furthermore, the value of tanδ in the range of -50°C to +50°C in the dynamic viscoelastic measurement is preferably 0.05 or less. Additionally, tanδ has a peak in the range of +90°C to +130°C, and the value of the peak of tanδ is preferably 0.100 or more and 0.150 or less, more preferably 0.105 or more and 0.140 or less, and even more preferably 0.110 or more and 0.130 or less. The dynamic viscoelastic measurement can be conducted using the method described in the examples below. Since tanδ has no peak in the range of -50°C to +50°C, the molecular mobility in the range of low temperatures to normal temperature is suppressed, which helps to reduce the three-month shrinkage reduction ratio of the raw yarn described later. When tanδ has a peak in the range of +90°C to +130°C and the value of the peak of tanδ 0.100 or more and 0.150 or less, sufficient mechanical properties for airbag applications are provided.

The polyamide fiber of the present embodiment is preferably a multi-filament yarn having the following properties (1) to (7):
(1) a total fineness of 150 dtex or more and 2500 dtex or less;
(2) a strength of 6.0 cN/dtex or more and 11.0 cN/dtex or less;
(3) an elongation of 15% or more and 30% or less;
(4) a boiling water shrinkage ratio of 4.0% or more and 11.0% or less;
(5) a finish pick-up ratio of 0.5 mass% or more and 1.5 mass% or less;
(6) a filament count of 30 or more and 400 or less; and
(7) a three-month shrinkage reduction ratio of 12% or less.

The total fineness of the polyamide fiber of the present embodiment is preferably 150 dtex or more, more preferably 175 dtex or more, and even more preferably 200 dtex or more from the perspective of achieving sufficient mechanical properties when used for an airbag and an airbag base fabric. On the other hand, from the perspective of weight reduction, the total fineness of the polyamide fiber is preferably 2500 dtex or less, more preferably 1500 dtex or less, and even more preferably 1000 dtex or less.

The tensile strength of the polyamide fiber of the present embodiment is preferably 6.0 cN/dtex or more, more preferably 7.0 cN/dtex or more, and even more preferably 8.0 cN/dtex or more, and is preferably 11.0 cN/dtex or less, more preferably 10.0 cN/dtex or less, and even more preferably 9.0 cN/dtex or less. When the tensile strength is equal to or more than the above lower limit, an excellent tensile tenacity and sufficient mechanical properties for airbag applications are provided. On the other hand, when the tensile strength is lower than or equal to the above upper limit, production can be performed without causing significant process instability due to increased fuzziness or yarn breakage.

The elongation of the polyamide fiber of the present embodiment is preferably 15% or more, more preferably 16% or more, and even more preferably 17% or more, and is preferably 30% or less, more preferably 28% or less, and even more preferably 25% or less. If the elongation is equal to or more than the above lower limit, sufficient toughness (an indicator of strength) is achieved for airbag applications. Moreover, since the elongation and strength are in a trade-off relationship, the elongation is preferably smaller than or equal to the above upper limit for balancing with the strength.

The boiling water shrinkage ratio of the polyamide fiber of the present embodiment is preferably 4.0% or more, more preferably 5.0% or more, and even more preferably 6.0% or more, and is preferably 11.0% or less, more preferably 10.0% or less, and even more preferably 9.0% or less. Having the boiling water shrinkage ratio equal to or more than the above lower limit can contribute to shrinking the fabric after weaving, thereby increasing the density of the fabric. On the other hand, in view of other properties and manufacturing costs, the boiling water shrinkage ratio is preferably smaller than or equal to the above upper limit.

The filament count of the polyamide fiber of the present embodiment is preferably 30 or more, more preferably 50 or more, and even more preferably 70 or more, and is preferably 400 or less, more preferably 300 or less, and even more preferably 200 or less. When the filament count of the multi-filament yarn is equal to or more than the above lower limit, the specific surface area increases, making the multi-filament yarn more flexible in response to external stress. This improves the air permeability and tear resistance of the base fabric. On the other hand, when the filament count of the multi-filament yarn is smaller than or equal to the above upper limit, fusion between filaments during melt spinning can be avoided.

The three-month shrinkage reduction ratio of the polyamide fiber of the present embodiment is preferably 12% or less, more preferably 11% or less, and even more preferably 10% or less. The three-month shrinkage reduction ratio refers to the change in the boiling water shrinkage ratio over time of winding after winding of the product. The three-month shrinkage reduction ratio is determined by comparing the shrinkage ratio immediately after winding with that after three months of storage. Usage of raw yarns with production date intervals, especially for weft yarns may cause a relaxation of the structure due to shrinkage ratio differences before and after the change of the feeding package, which may cause density variation. When the three-month shrinkage reduction ratio is 12% or less, a raw yarn with excellent long-term dimensional stability is provided and the appearance defects (weaving streaks) caused by density variation during the production of the base fabric can be suppressed.

The total fineness, strength, elongation, boiling water shrinkage ratio, finish pick-up ratio, and three-month shrinkage reduction ratio can be measured by methods such as those described in the examples, for example.

Furthermore, the polyamide fiber of the present embodiment is excellent in suppressing the number of yarn breakages during yarn manufacturing (yarn breakage tendency). The yarn breakage tendency can be evaluated using a method such as that described in the examples, for example.

Examples of the polyamide used in the polyamide fiber of the present embodiment are the same as the examples of the polyamide exemplified in the "Polyamide Composition". Examples of the polyamide fiber of the present embodiment include filers of the polyamide 6, polyamide 66, polyamide 11, polyamide 12, polyamide 610, polyamide 612, polyamide 46, polyamide 6T, polyamide 6I, copolymers of these, and mixtures of these, for example. Of these, a polyamide 66 fiber made of polyhexamethylene adipamide fibers is particularly preferred. Polyhexamethylene adipamide refers to a polyamide fiber that is composed of 100% hexamethylene diamine and adipic acid and has a melting point of 250°C or higher. The polyamide 66 fiber of the present disclosure may be a fiber made from a polymer formed by co-polymerizing or blending polyamide 8, polyamide 6I, polyamide 10, polyamide 6T, etc., with polyhexamethylene adipamide, within a range where the melting point is not lower than 250°C.

### <Spinning of Polyamide Fiber>

The spinning temperature in melt spinning is preferably 290°C or higher and 310°C or lower. The spinning temperature is preferably 310°C or lower, more preferably 300°C or lower, and even more preferably 295°C or lower because the thermal decomposition of the polyamide can be suppressed. On the other hand, the spinning temperature of 290°C or higher is preferred because it allows the polyamide to exhibit sufficient molten flowability, thereby ensuring uniform extrusion between the spinneret holes and enabling high draw ratios.

The residence time in the melt spinning step (the time from the melting of the polyamide resin to the extrusion from the spinneret) is preferably as short as possible. The residence time is preferably 30 minutes or shorter, more preferably 15 minutes or shorter, and most preferably 0.5 minutes or longer and 7 minutes or shorter. A shorter time is preferred because polyamide components with a polymerization degree of 5 or less in the polymer is increased at the melting temperature.

For thermal stability in high temperature and high humidity environments, it is preferable that a copper compound is added to the polyamide to give a copper concentration of 1 to 500 ppm, more preferably 30 to 500 ppm. By doing so, even if the product is exposed to high-temperature and high-humidity environments or environments containing large amounts of ozone for a long time, the decline in mechanical performances can be effectively suppressed. If the copper content is less than 30 ppm, the heat resistance strength retention ratio is decreased, and if the addition amount is more than 500 ppm, the strength is decreased.

The copper compound is not particularly limited in type, but organic copper salts such as copper acetate or copper halides such as copper(I) chloride or copper(II) chloride are preferably used, for example. It is more preferable to use a copper compound in combination with a metal halide compound. Examples of the metal halide compound include potassium iodide, potassium bromide, and potassium chloride, for example. A preferred combination in the present embodiment is copper(I) iodide and potassium iodide, or copper acetate and potassium iodide. The copper content in the polyamide can be measured by methods such as atomic absorption spectroscopy or colorimetry.

Without limitation, stabilizers, such as organic antioxidant and thermal stabilizers, e.g., hindered phenol-based antioxidants, sulfur-based antioxidants, phosphorus-based antioxidants, and ultraviolet absorbers and light stabilizers, e.g., hindered amine-based, benzophenone-based, imidazole-based thermal stabilizers and ultraviolet absorbers, may be added. The amount of additives can be selected as appropriate, but typically, 1 to 1000 ppm of additives may be added relative to the polyamide. One of these additives can be used alone or in combination with several types.

In the melt spinning step, a single- or twin-screw extruder is preferably used in the melt section. Such an extruder can apply appropriate pressure to the polyamide resin while guiding it to the polymer piping, gear pump, and spinning pack.

Moreover, it is preferable to filter the polyamide resin before it is extruded from the spinneret using a metal fiber nonwoven fabric filter, sand, etc. because this stabilizes the spinning operation. When producing high-strength fiber, precise filtration is necessary to remove contaminants such as coarse silica compounds so as to withstand high draw ratios. However, the presence of a lot of contaminants can cause filter clogging, which makes continuous production impossible. Precision filtration is preferably done with an opening size of 50 µm or less, and more preferably 30 µm or less.

The shape of the holes in the spinneret can be selected based on the cross-sectional shape of the filaments that make up the filament to be produced. The filaments spun from the spinneret are solidified by cooling air, treated with process oil, taken up, drawn, and heat-treated to obtain the polyamide fiber used in the present disclosure.

Furthermore, the finish pick-up ratio applied to the yarn in the fiber manufacturing step is preferably in the range of 0.5 mass% or more and 1.5 mass% or less. A yarn with a finish pick-up ratio of 1.5 mass% or less hardly experiences difficulty in guiding the weft yarn due to stickiness (tackiness). When the finish pick-up ratio is 0.5 mass% or more, the occurrence of filament breakage derived fuzz during the stretching in the fiber manufacturing step can be suppressed.

### <Polyamide Base Fabric>

In weaving, weaving machines such as water-jet looms, air-jet looms, and rapier looms can be used. An airbag base fabric is a high-density fabric, and during the sizing step and weaving step, it is preferable to increase the warp yarn tension to ensure smooth passage in the steps. By setting the warp yarn tension higher in the weaving process and inserting the weft yarn without a shuttle, effective reed insertion conditions can be created, leading to the formation of a high-density fabric. The shuttle-less insertion of the weft yarn is performed by the loom using water, air, or rapier, with the weft yarn being transported rapidly and instantaneously across the width of the fabric.

The woven fabric can undergo a scouring step to wash off the processing oil from the polyamide fibers.

Warm water or pressurized hot water can be used in the scouring step, and the treatment can be a single-stage or multi-stage process. It is also preferable to apply a conventional scouring agent during the scouring.

The fabric is preferably thermally set in a heat-setting step. The heat-setting temperature is preferably 110°C or higher and 200°C or lower, and the heat-setting time may be suitably selected in the range of 0.1 minutes or longer and 30 minutes or shorter. During the heat-setting step, the fabric is preferably dried while being tensioned to ensure that the shrinkage force of the fabric is maintained at a predetermined level. By thermally setting the fabric, the stability of the subsequent resin coating step can be improved.

After the scouring step, the fabric may be dried if necessary before the heat-setting step. The drying temperature is preferably in the range of 80°C or higher and 130°C or lower, preferably 100°C or higher and 120°C or lower. The treatment time is preferably appropriately selected to be 0.1 minutes or longer and 30 minutes or shorter. The drying can be done while the fabric is in a relaxed or tensioned state.

The polyamide base fabric can also be used as a non-coated base fabric after the heat-setting step. Furthermore, the polyamide fabric can be coated with a coating agent such as silicone- or urethane-based agents or thermally laminated with a thin-film sheet to process and use it as a coated airbag base fabric.

Methods for coating the surface of the fabric include the method of immersing the fabric in a resin solution tank and the method of using devices such as mangles, vacuum, coating knives, etc. to form the coating and even out the extra resin. Alternatively, the bar coating method using a comma coater, or the method of spraying the resin using a spray device or foaming device can be used. Of these, the knife coating method is preferred for uniform and minimal resin application.

The coating amount is 5 g/m² or more and 100 g/m² or less, more preferably 10 g/m² or more and 70 g/m² or less, and even more preferably 15 g/m² or more and 30 g/m² or less. With a coating amount of 5 g/m² or more, the required air-tightness can be achieved. On the other hand, with a coating amount of 100 g/m² or less, the coated fabric can maintain flexibility of the coated woven fabric and have good foldability and the overall weight of the bag can be reduced.

After coating, vulcanization treatment is preferably performed at a temperature of 150°C or higher and 190°C or lower. The treatment time is preferably appropriately selected to be 0.5 minutes or longer and 3.0 minutes or shorter. The fabric is preferably treated while being tensioned to maintain the predetermined shrinkage force. By thermally fixing the base fabric, the dimensional stability of the product can be achieved.

### <Airbag>

The airbag can be selected from among airbags commonly used for the driver's seat, passenger seat, sides (including inflatable curtains), rear seats, etc., and the shape of the bag of the airbag may be circular, oval, elliptical, rectangular, polygonal, or any combination of these, as long as it satisfies the required expansion shape.

Seam shapes include single straight lines, multiple parallel straight lines, zigzag lines, a combination of straight and zigzag lines, straight and diagonal lines, etc. The sewing method can be any of commonly used methods, such as normal sewing and double-loop stitching, and the sewing pitch may be selected from the range of 20 to 60 stitches per 10 cm. The thread diameter can be selected from the range of 420 d to 3000 d, and the material of the thread can include commercially available polyamide fibers, polyester fibers, vinylon-based fibers, aramid-based fibers, glass fibers, etc.

### <Manufacturing Method of Polyamide Composition>

Hereinafter, an example of the manufacturing method of the polyamide composition will be specifically described. However, the following example does not limit the manufacturing method of the polyamide composition.

### <Step 1: Dissolution Step>

A silicone-coated polyamide base fabric is dissolved and the polyamide is extracted using a metal chloride alcohol solution.

The shape of the polyamide base fabric to be dissolved is not particularly limited. It may be added in the original shape of offcuts upon the manufacturing of the base fabric or used airbag fabric, or it may be cut according to the size of the apparatus used for dissolution.

The temperature upon dissolution is not particularly limited, but it is preferably 40 to 90°C, and more preferably lower than or equal to 40 to 90°C. The temperature below 40°C slows down the dissolution rate. The temperature above 90°C exceeds the boiling point, which is not desirable due to corrosiveness and decomposability.

The dissolution may be carried out in batch or continuously.

In the case of dissolution in batch, there is no particular limitation regarding whether stirring is carried out or not, but it is preferred to carry out stirring. Stirring improves the dissolution speed of the polyamide solid.

In the case of continuous dissolution, the solvent may be allowed to flow continuously over the solid, or the solution may be circulated. Circulating the solvent is preferred because the amount of solvent used can be reduced.

There is no particular limitation on the shape of the container, and any shape can be used, such as a tank-type or circulation-type container. The container may have a mechanism that prevents a part that rotates driven by an external driving force during dissolution from coming into contact with the silicone-coated polyamide base fabric. The container may also have a mechanism for continuously collecting the silicone resin resulting from dissolution.

The dissolution time is not particularly limited but is preferably 5 minutes to 100 hours.

There is no particular limitation on the method to ensure that fine silicone resin particles are not included in the solution obtained by dissolving the polyamide, and several methods can be used.
1) An apparatus can be used which has a mechanism that prevents a part that rotates upon stirring from directly contacting the polyamide base fabric, to ensure that fine silicone pieces are not generated.
   For example, a structure may be used that prevents the polyamide base fabric from coming into contact with the stirring blades by surrounding the polyamide base fabric with a resin or metal that does not dissolve in the solvent.
2) A facility may be used that is structured to have a mesh bag with fine liquid passage parts suspended during dissolution so that the silicone pieces accumulate inside the bag.

It is also preferable to remove other coatings on the polyamide composition along with the silicone resin.

Since the separated silicone resin and other coatings are soaked with the polyamide solution, they are preferably washed off to recover the polyamide. There is no particular limitation on the solvent used for washing, but a metal chloride alcohol solution is preferred. Examples of the metal salt in the metal chloride alcohol solution include zinc chloride and calcium chloride, for example, and calcium chloride is preferred. Any alcohol that is a good solvent can be used as the alcohol used in the metal salt, such as methanol, ethanol, or isopropanol, for example, and methanol is preferred. There is no particular limitation on the washing method, and examples include stirring and washing in a tank-type reactor or circulating washing in a filtration unit.

The polyamide solution, from which silicone resin and other coatings have been removed, is preferably filtered using a stainless-steel mesh filter or a membrane filter. The opening size of the filter upon filtration can be appropriately selected according to the method used to avoid mixing fine silicone resin particles. The opening size of the filter is preferably 30 µm or less, and more preferably 10 µm or less.

### <Step 2: Polyamide Recovery Step>

Step 2 is the step of recovering the polyamide from the polyamide solution obtained in Step 1, from which silicone resin has been removed.

There is no particular limitation on the method for precipitating the dissolved polyamide from the solution, and several precipitation methods can be used depending on the dissolution state.

If the polyamide has been dissolved by heating, precipitation through cooling by utilizing the temperature dependency of the solubility of the polyamide can be used. In this case, the polyamide is precipitated from the solution containing the polyamide dissolved therein without adding an additional solvent, to thereby yield the precipitated polyamide.

If the temperature dependency of the solubility upon dissolution is small, the polyamide may be precipitated by mixing it with a poor solvent to lower the solubility thereof. In this case, after a poor solvent is added to the solution containing the polyamide dissolved therein, the polyamide is precipitated from the solution, thereby yielding the precipitated polyamide. There is no particular limitation on the poor solvent, and examples include water, as well as alcohols such as ethanol, n-propanol, and isopropanol, for example. The method of adding the poor solvent to the polyamide may involve adding the polyamide solution to the poor solvent or adding the polyamide to the poor solvent. The addition speed, temperature, and stirring speed during addition are not particularly limited.

The amount of the poor solvent to be added is not particularly limited, but is preferably 0.5 to 50 times, more preferably 1 to 10 times the weight of the polyamide solution. The lower the amount added, the lower the recovery rate, and the higher the amount added, the larger the volume of the solution, which requires more time and energy for processing.

If the temperature dependency of the solubility upon dissolution is small, the solubility of the polyamide may also be reduced by lowering the concentration of calcium chloride. There is no particular limitation on the method for adding methanol to lower the concentration of calcium chloride, but either adding the polyamide solution to methanol or adding the polyamide to methanol may be used. The addition speed, temperature, and stirring speed during addition are not particularly limited.

There is no particular limitation on the shape of the container, and any shape may be used such as a tank-type or circulation-type container.

The precipitated polyamide is preferably recovered by solid-liquid separation. Examples of the solid-liquid separation method include, for example, filtration, centrifugation, and sedimentation separation. Either batch or continuous methods may be used for either of these processes.

The polyamide obtained through solid-liquid separation is preferably washed with a solvent. The washing liquid is not particularly limited, but a solvent capable of dissolving a solution with the composition of the liquid phase upon precipitation, a good solvent, and calcium chloride, etc., may be used, for example. Examples of the additional washing liquid include water, methanol, ethanol, n-propanol, and isopropanol, for example. The additional washing liquid is preferably methanol. Washing may be performed multiple times as needed.

There is no particular limitation on the washing method, and examples include batch washing, continuous washing by placing the solids in a solid-liquid separation apparatus such as a filtration apparatus or centrifuge and causing water to flow, and methods of combining these.

After recovery, the polyamide can be treated by adding a copper compound, a metal halide, a heat stabilizer, or an organic antioxidant such as a hindered phenol-based antioxidant, sulfur-based antioxidant, phosphorus-based antioxidant, or a hindered amine-based, benzophenone-based, imidazole-based light stabilizer or ultraviolet absorber, as a stabilizer, described above, or the like. The amount of additives can be selected as appropriate, and 1 to 1000 ppm of additives may be added relative to the amount of the polyamide. These additives can be used either singly or in combination with several types.

The polyamide after washing may be dried by removing the washing solvent through heating and/or reduced pressure to obtain powdered polyamide.

As described above, the present disclosure can provide a manufacturing method of a polyamide composition with a high yield from a composition in which silicone has been coated on a polyamide that is useful as an engineering plastic.

### <Applications of Polyamide Composition>

A fiber can be obtained by spinning the polyamide composition of the present embodiment. A woven fabric can be obtained by weaving the fibers of the present embodiment. The woven fabric of the present embodiment can be used for an airbag.

### (Manufacturing Method of Polyamide Solution)

This specification further discloses s disclosure related to a manufacturing method of a polyamide solution. The manufacturing method of the polyamide solution of the present disclosure may be, for example, a method of efficiently dissolving a polyamide from a polyamide-containing material to produce a polyamide solution.

The manufacturing method of the polyamide solution in an embodiment of the present disclosure includes placing a polyamide-containing material that includes an insoluble component and a polyamide into a container having liquid passage holes made of an insoluble resin, adding a metal chloride alcohol solution containing a metal chloride and an alcohol, stirring the resultant at a temperature of 120°C or lower to dissolve the polyamide, and isolating the insoluble component inside the container (this step may also be referred to as the "separation step" in this specification). The method may further include other steps.

### <Polyamide-Containing Material>

In the manufacturing method of the embodiment of the present disclosure, the polyamide is dissolved from the polyamide-containing material.

The polyamide-containing material is a recycled material of a polyamide, including fibers where the polyamide is used as a raw material, and process offcuts or waste of shaped products such as automotive parts and electrical product components. Specific examples include, but are not limited to, process offcuts or waste from clothing, airbags, tire cords, parts of engine rooms, intake systems, fuel system parts, connectors, fishing nets, and UD tapes.

The polyamide-containing material includes at least an insoluble component insoluble in the metal chloride alcohol solution and a polyamide. The ratio of the total mass of the insoluble component and the polyamide per 100 mass% of the polyamide-containing material is preferably 50 to 100 mass%, more preferably 60 mass% or more, even more preferably 70 mass% or more, and particularly preferably 80 mass% or more.

Furthermore, the mass ratio of the polyamide to 100 mass% of the polyamide-containing material is preferably 10 to 100 mass%, more preferably 20 to 99 mass%, and even more preferably 70 to 98 mass%.

Examples of the insoluble component insoluble in the metal chloride alcohol solution include silicone, carbon fibers, glass fibers, polyolefins such as polyethylene and polypropylene, polyester, and fluororesins. The insoluble component is the substance remaining after mixing the sample with 10 times the mass of a metal chloride alcohol solution (e.g., a 20 wt% calcium chloride methanol solution) and stirring at a temperature of 60°C for 24 hours.

### <Metal Chloride Alcohol Solution>

In the manufacturing method of the embodiment of the present disclosure, a metal chloride alcohol solution is used to dissolve the polyamide.

The metal chloride alcohol solution contains a metal chloride and an alcohol, and may further contain other components. In particular, the ratio of the total mass of the metal chloride and the alcohol to 100 mass% of the metal chloride alcohol solution is preferably 80 mass% or more, more preferably 90 mass% or more, and even more preferably 100 mass%.

The metal chloride is not particularly limited as long as it dissolves in the alcohol used, but calcium chloride, zinc chloride, or lithium chloride is preferred in view of the high solubility of the polyamide. They may be used individually or in combination. Both hydrates and anhydrides may be used, but anhydrides are preferably used from the perspective of the solubility of the polyamide.

From the perspective of the solubility of the polyamide, the moisture content in the metal chloride alcohol solution is preferably 15 wt% or less, more preferably 10 wt% or less, and even more preferably 7 wt% or less. The moisture content in the metal chloride alcohol solution can be measured by known methods (e.g., Karl Fischer moisture meter).

The alcohol is preferably a lower alcohol with 1 to 4 carbon atoms because it has a high solubility of the metal chloride, and methanol and ethanol are particularly preferred, with methanol being the most preferred.

From the perspective of mass production, the solubility of the polyamide in the metal chloride alcohol solution is preferably 1 wt% or more at a temperature of 120°C or less, more preferably 3 mass% or more, and even more preferably 5 mass% or more. Furthermore, in view of providing an appropriate viscosity for ease of handling, it is preferably 20 wt% or less, more preferably 18 wt% or less, and even more preferably 15 wt% or less.

### <Container>

The manufacturing method of the embodiment of the present disclosure uses a container made of an insoluble resin and has liquid passage holes.

In conventional methods, separating and removing contaminants such as silicone can take a very long time. This is because silicone pieces, which are cut into fine particles during stirring, clog the filter of a filtration apparatus, making separation difficult, which becomes a critical issue upon scale-up. Moreover, depending on the hardness of the contaminants, there is a concern about damage to the inner wall and stirring blades of the reactor, making the separation of contaminants from the polyamide-containing material a technical challenge from the perspective of protection of the apparatus.

Thus, by using a container made of an insoluble resin with liquid passage holes in the manufacturing method of the polyamide solution, the polyamide can be separated from contaminants as insoluble materials from the polyamide-containing material in a short time using industrially suitable raw materials, without causing the reduction of molecular weight of the polyamide. Furthermore, the method reduces the risk of damaging the apparatus with contaminants, provides good operability, and is capable of mass production, thereby offering a method to produce a polyamide solution.

The container may be made solely of an insoluble resin or may contain other components.

An insoluble resin refers to a resin that is insoluble in the metal chloride alcohol solution. Here, "insoluble" means that the mass loss after immersion in the metal chloride alcohol solution at 120°C for 24 hours is 1 wt% or less.

The insoluble resin is not particularly limited, but examples preferably include polyethylene, polypropylene, polyurethane, polystyrene, polydimethylsiloxane, and polyester, in view of ease of processing, flexibility, ease of loading into the reactor, and a reduced risk of damages to the apparatus. They may be used individually or in combination.

The liquid passage holes isolate contaminants such as materials insoluble in the metal chloride alcohol solution in the container and selectively allow the solution to pass through. The size and number of the liquid passage holes are not particularly limited as long the contaminants as insoluble materials can be isolated inside the container. However, from the perspective of ease of passage of the metal chloride alcohol solution in and out of the container and enhancing the solubility of the polyamide, the opening size is preferably 0.05 cm to 10 cm. The liquid passage holes may be perforated holes or mesh.

By placing the polyamide-containing material in the container with the liquid passage holes, even if the contaminants are brittle, they are less likely to be excessively cut during stirring and mixing, making it possible to use them with a stirring machine.

Since the container with liquid passage holes can be of a size that allows the container to be placed through the manhole of the reactor, any special apparatus or operations are not required. Moreover, multiple containers can be used, which allows increasing the amount of material to be fed.

The container with liquid passage holes can be used by placing the container into the reactor without fixing it. Since the container rotates due to stirring, the liquid passage holes are prevented from being blocked by the contaminants. Furthermore, as long as the liquid passage holes allow passage in one direction and are not blocked, it is acceptable to use the container while being suspended.

Next, the steps in the manufacturing method according to the embodiment of the present disclosure will be explained.

### <Separation Step>

The temperature at which the polyamide-containing material is stirred in the metal chloride alcohol solution is 120°C or lower. When the temperature is 120°C or lower, decomposition due to alkylation of the polyamide can be suppressed. The temperature is preferably 100°C or lower, more preferably 80°C or lower. Moreover, it is preferably 0°C or higher, more preferably 10°C or higher, and even more preferably 20°C or higher.

The amount of the metal chloride alcohol solution added is preferably twice or more, more preferably 3 to 100 times, even more preferably 5 to 50 times, and particularly preferably 10 to 20 times the mass of the polyamide-containing material, from the perspective of the efficiency of the dissolution of the polyamide.

The polyamide-containing material may be shredded to a size that does not allow residues, such as substances insoluble in the metal chloride alcohol solution, to pass through the liquid passage holes, and then placed in the container.

### <Other Steps>

In the manufacturing method according to the embodiment of the present disclosure, the polyamide solution may undergo further solid-liquid separation to remove the insoluble components of the contaminants discharged through the liquid passage holes out of the container, contained in the polyamide solution after the separation step. Since most of the contaminants are separated and retained inside the container in the separation step, good filtration performance can be achieved. Examples of the method of solid-liquid separation include filtration and centrifugal separation. For any of these methods, either a batch or continuous method may be used.

The polyamide can be produced by precipitating the polyamide from the polyamide solution obtained by the manufacturing method of the present disclosure. The precipitation method is not particularly limited, but methods such as crystallization by cooling by utilizing the temperature dependence of the solubility of the polyamide or mixing the polyamide with a poor solvent to decrease the solubility and cause precipitation can be used. The poor solvent is not particularly limited. The solubility of the polyamide can also be lowered by reducing the concentration of the metal chloride (e.g., calcium chloride). The addition method of the poor solvent may be either the method by adding the polyamide solution to the poor solvent or by adding the poor solvent to the polyamide. The addition rate, temperature, stirring speed, etc. are not particularly limited.

The precipitated solid may be separated from the solution. Examples of the method of solid-liquid separation include filtration, centrifugal separation, and sedimentation separation. For any of these methods, either a batch or continuous method may be used.

The solid obtained from the solid-liquid separation may be washed with a solvent. The solvent is not particularly limited, but it is preferable to use a solvent capable of dissolving a solution with the composition of the liquid phase upon precipitation, a good solvent, a metal chloride, etc.

The metal chloride alcohol solution contained in the polyamide solution after the separation of the polyamide may be concentrated and purified for reuse.

The manufacturing method of the present disclosure efficiently provides a polyamide solution with a low mass ratio of contaminants, such as materials insoluble in the metal chloride alcohol solution.

The polyamide solution obtained by the manufacturing method of the present disclosure can be used as a raw material for regenerating the polyamide through precipitation. The precipitated polyamide can be used as a raw material for polyamide fibers, polyamide base fabrics, airbags, and the like.

### <Industrial Applicability>

Since the manufacturing method of the present disclosure allows for the efficient separation of contaminants from a polyamide-containing material without requiring the use of a special apparatus or reactor, applications to large-scale production of polyamide solutions and polyamide recycling are expected.

### EXAMPLES

The following will provide a more detailed description of the present disclosure with reference to examples, but the present disclosure is not limited to the examples.

The method of X-ray fluorescence analysis in the present examples is as follows.

### <X-ray Fluorescence Analysis Apparatus>

Measurement apparatus: ZSX Primus II (Rigaku Corporation)
Each component was quantified using a semi-quantitative method using a polyamide as the balance component.

The method of GPC analysis in the present examples is as follows.

### <GPC Apparatus>

Measurement apparatus: HPLC-8420 GPC (TOSOH Corporation)
Column: TSKgel SuperHM-N (TOSOH Corporation)
Elution liquid: HFIP 5 mmol/L with TFA Na
Flow rate: 0.2 mL/min for the sample, 0.2 mL/min for the reference
Temperature: 40°C
Injection volume: 10 µL
Sample concentration: 1 mg/mL
GPC standard: EaslVial PM

### (Agilent PL2020-0201)

The integral distribution data with a polymerization degree of 5 or less was read from detection values with molecular weights of 1,148 or less, and the value of the polyamide component was calculated.

The method for measuring the dynamic viscoelasticity in the present examples is as follows.

### <Measurement of Dynamic Viscoelasticity>

### Measurement apparatus: RSA-G2 (manufactured by TA Instruments)

Sample shape: 20 mm in length (distance between chucks)
   The cross-sectional area was calculated by weighing the sample of 10 cm and converting it using a specific gravity of 1.14.
Measurement frequency: 1 Hz
Measurement strain: 0.05%
Heating rate: 5°C/min
Atmosphere: Nitrogen

A peak was determined to be present when the values of tanδ above the reference line drawn for tanδ in the range of -50°C to +50°C formed a peak shape, or when the values of tanδ above the reference line drawn for tanδ in the range of +90°C to +130°C formed a peak shape.

The method for measuring the fineness in the present examples is as follows.

### <Fineness>

The measurement was carried out in accordance with JIS L 1013 8.3.

The methods for measuring the tensile strength, tensile tenacity, and elongation in the present examples are as follows.

### <Tensile Tenacity, Tensile Strength, and Elongation>

The measurements were carried out in accordance with JIS L 1013 8.5, using a fiber sample of 150 mm at a tensile speed of 300 mm/min.

The evaluation method for the finish pick-up ratio in the present examples is as follows.

### <finish Pick-up Ratio>

The measurement was carried out using cyclohexane as the solvent in accordance with JIS L 1013 8.27.

The method for measuring the boiling water shrinkage ratio and three-month shrinkage reduction ratio in the present examples is as follows.

### <Boiling Water Shrinkage ratio and Three-month Shrinkage Reduction Rate>

The measurement was carried out in accordance with JIS L 1013 8.18.

The boiling water shrinkage ratio was measured on the production day of the raw yarn and 90 days after the production of the raw yarn, and the change rate (%) was used as the three-month shrinkage reduction ratio.

The evaluation method for the yarn breakage tendency during spinning in the present examples is as follows.

### <Yarn Breakage Tendency>

The number of yarn breakages during 8 hours of production was counted and was evaluated according to the following criteria.
A: The yarn breakage count was less than 3 during 8 hours of production
C: The yarn breakage count was 3 or more during 8 hours of production

The evaluation method for the weaving streak defects in the present examples is as follows.

### <Weaving Streak Defects>

Weaving streak: A weaving streak refers to a defect caused mainly by changes in the density of the base fabric, resulting in the appearance defects of streak line in the weft direction and width direction of the base fabric. The evaluation method involved setting the fabric on the inspection table and performing an inspection, with a visual inspection by a technician with more than 3 years of experience in inspecting airbag base fabrics. The evaluation assessed the presence or absence of streak in the weft direction and width direction of the base fabric before and after the change of the weft yarn feeding package. Ten points at the change of the weft yarn feeding package of the base fabric were checked, and an evaluation of defects was performed according to the following criteria.
A: No streak defects were observed
B: Streak defects were observed, but the density variation was less than ±5%
C: Streak defects were present, and the density variation is ±5% or more

### [Example 1]

A polyamide 66 base fabric (hereinafter referred to as "coated base fabric") made of 90 wt% of polyamide 66 and 10 wt% of a silicone resin was cut into approximately 20 cm square pieces, and evenly filled into 20 cylindrical containers made of polyethylene mesh, each with a diameter of 20 cm, a height of 20 cm, and an opening size of 5 mm. Next, 480 kg of methanol (manufactured by Wako Pure Chemical Industries) and 120 kg of anhydrous calcium chloride (manufactured by Wako Pure Chemical Industries) were placed into a 1 m³ glass-lined reaction vessel and mixed using an agitator to prepare a 20 wt% calcium chloride methanol solution. The cylindrical containers filled with the polyamide 66 base fabric were immersed and stirring was performed at 60°C for 24 hours to dissolve the polyamide. After dissolution, the silicone resin as a contaminant was isolated inside the cylindrical container. The resulting polyamide solution was subjected to pressure filtration using a polyethylene filter with an opening size of 10 µm to remove a small amount of leaked silicone resin. The filtration performance was good. Next, the filtrate was dripped into 600 kg of methanol to precipitate the solids. After the precipitated solids were separated by pressure filtration, they were mixed with 300 kg of water, vacuum filtrated, and washed. After repeating the water washing five times, the resultant was vacuum dried at 80°C, recovering 40 kg of the polyamide (recycled polyamide composition).

Analysis of the obtained recycled polyamide composition by X-ray fluorescence revealed that it contained 300 ppm of silicon atoms. Moreover, the content of polyamide components with a polymerization degree of 5 or less (oligomers) was 1230 ppm.

This operation was performed several times to obtain a powder, which was then melted using an extruder at a temperature of 300°C and extruded by melt spinning at 290°C with a residence time of 180 seconds. The extruded polymer was cooled and solidified by cool air, forming filaments. After a synthetic aliphatic ester-based spinning oil is applied to the solidified filaments, the filaments were drawn and heat-treated to produce a regenerated polyamide 66 fiber filaments with a total fineness of 233 dtex and a filament count of 36. Analysis of the regenerated polyamide 66 fibers by X-ray fluorescence revealed that they contained 320 ppm of silicon atoms. Moreover, the content of polyamide components with a polymerization degree of 5 or less (oligomers) was 4850 ppm.

These fibers were warped without twisting or sizing and woven into a plain weave fabric using the same yarn for the weft, on a 2.0 m width water jet loom at a speed of 650 rpm, to produce a regenerated polyamide 66 base fabric.

The evaluation results of the obtained regenerated polyamide 66 fibers and regenerated polyamide 66 base fabric are summarized in Table 1.

### [Example 2]

The same procedure as Example 1 was performed, except that the regenerated polyamide 66 fiber filaments with a total fineness of 490 dtex and a filament count of 136 were produced in the spinning step. The results are summarized in the following Table 1.

### [Example 3]

The same procedure as Example 2 was performed, except that 25 kg of the coated base fabric and 25 kg of 100 wt% of polyamide 66 base fabric (hereinafter referred to as "non-coated base fabric") were used in the manufacturing step of the polyamide composition. The results are summarized in the following Table 1.

### [Example 4]

The same procedure as Example 2 was performed, except that 10 kg of the coated base fabric and 40 kg of the non-coated base fabric were used in the manufacturing step of the polyamide composition. The results are summarized in the following Table 1.

### [Example 5]

The same procedure as Example 2 was performed, except that the opening size of the 20 cylindrical containers was set to 10 mm. The results are summarized in the following Table 1.

### [Comparative Example 1]

A water solution containing a neutralization salt of hexamethylenediamine and adipic acid as a conventional polyamide 66 formation resin was mixed with sodium hypophosphite as a polymerization catalyst, and subjected to polycondensation in a continuous polymerization apparatus. After a solution of copper chloride/potassium chloride was added as a thermal stabilizer, late-stage polymerization was carried out, followed by pelletization into resin pellets. Thereafter, a polyamide 66 polymer with a relative viscosity ηr of 3.1 was obtained by solid-phase polymerization. The relative viscosity ηr was determined by dissolving 2.5 g of the sample in 25 cc of concentrated sulfuric acid (98%) and performing a measurement using an Ostwald viscometer in a constant temperature bath (25°C).

The obtained polymer was processed through the same melt spinning step and weaving step as in Example 2. The results are summarized in the following Table 1. Although high-strength yarn was spun, weaving streak defects occurred during airbag weaving when yarns with a production date interval were used.

### [Example 6]

Equal amounts of the pellets obtained in Comparative Example 1 and the powder obtained in Example 1 were fed into an extruder, and the same melt spinning step and weaving step as in Example 2 were carried out. The results are summarized in the following Table 1.

### [Example 7]

Equal amounts of the pellets obtained in Comparative Example 1 and the powder obtained in Example 5 were fed into an extruder, and the same melt spinning step and weaving step as in Example 2 were carried out. The results are summarized in the following Table 1.

### [Comparative Example 2]

The same procedure as Example 2 was performed, except that 50 kg of the non-coated base fabric was used in the manufacturing step of the polyamide composition. The results are summarized in the following Table 1. The spinning of high-strength yarns was unsatisfactory. This is considered to be due to the loss of plasticity of the low molecular weight polyamide.

### [Comparative Example 3]

The coated base fabric (50 kg) was cut into approximately 20 cm square pieces and stirred in a NaOH solution (pH 10) weighing 4 times that of the fabric for 24 hours. Thereafter, the base fabric was centrifugally dewatered. The dewatered base fabric was then stirred in a rotating container to remove the coating agent. Subsequently, the base fabric was washed in running water, dewatered by centrifugation, and dried. The base fabric was then re-melted at 280°C using a single-screw extruder to produce regenerated pellets. The obtained pellets were processed through the same melt spinning step and weaving step as in Example 2. The results are summarized in the following Table 1. The spinning filtration pressure tended to be increased, and the tensile strength did not reach the desired level. Moreover, weaving streak defects occurred during airbag weaving when yarns with a production date interval were used.

### [Comparative Example 4]

The same procedure as Example 2 was performed, except that 3 kg of the coated base fabric and 47 kg of the non-coated base fabric were used in the manufacturing step of the polyamide composition. The results are summarized in the following Table 1. The content of silicon compounds in the polyamide was small, resulting in poor stretchability.

### [Comparative Example 5]

The same procedure as Example 2 was performed, except that dissolution was carried out without using cylindrical containers. The results are summarized in the following Table 1. The spinning filtration pressure increased rapidly, making spinning impossible.

**[Table 1]**

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|
| Total fineness | dtex | 233 | 490 | 490 | 490 | 490 | 490 | 490 | 490 | 490 | 490 | 490 | 490 |
| Filament count | count | 36 | 136 | 136 | 136 | 136 | 136 | 136 | 136 | 136 | 136 | 136 | 136 |
| Oligomer content GPC | ppm | 1230 | 1560 | 2330 | 2110 | 1480 | 1970 | 1280 | 22070 | 1180 | 18700 | 1380 | 1280 |
| (Polyamide composition) | | A | A | A | A | A | A | A | C | A | c | A | A |
| Silicon atom content XRF | ppm | 300 | 320 | 140 | 30 | 900 | 390 | 780 | ND | ND | 60 | 10 | 1100 |
| (Polyamide composition) | | A | A | A | B | A | A | A | C | C | A | C | C |
| Oligomer content GPC | ppm | 4850 | 6620 | 7230 | 9910 | 5720 | 14540 | 17470 | 26560 | 4650 | 22200 | 5080 | 4740 |
| (Polyamide fiber) | | A | A | A | B | A | B | B | C | A | C | A | A |
| Silicon atom content XRF | ppm | 320 | 350 | 170 | 35 | 990 | 450 | 890 | ND | ND | 90 | 20 | 1230 |
| (Polyamide fiber) | | A | A | A | B | B | A | B | C | C | A | C | C |
| tanδ (-50 to +50°C) | - | No peak | No peak | No peak | No peak | No peak | No peak | No peak | Peak | No peak | Peak | No peak | Threads could not be produced |
| | | A | A | A | A | A | A | A | C | A | C | A | |
| tanδ (+90 to +130°C) | - | 0.12 | 0.13 | 0.12 | 0.14 | 0.12 | 0.11 | 0.13 | 0.12 | 0.13 | 0.12 | 0.14 | |
| Tanδ - Tmax (peak) | °C | 106 | 101 | 104 | 106 | 102 | 110 | 105 | 106 | 104 | 106 | 101 | |
| Tenadty | N | 19.0 | 40.0 | 39.1 | 40.6 | 32.1 | 39.8 | 36.0 | 40.0 | 39.2 | 32.8 | 38.1 | |
| Strength | cN/dtex | 8.15 | 8.16 | 7.98 | 8.29 | 6.55 | 8.12 | 7.35 | 8.16 | 8.00 | 6.69 | 7.78 | |
| Elongation | % | 20.0 | 20.5 | 20.9 | 20.2 | 20.9 | 19.9 | 20.4 | 20.5 | 19.8 | 20.6 | 19.2 | |
| Finish pick-up ratio | % | 1.00 | 0.70 | 0.70 | 0.70 | 0.70 | 0.70 | 0.70 | 0.70 | 0.70 | 0.70 | 0.70 | |
| Boiling water shrinkage ratio | % | 6.0 | 7.8 | 7.7 | 7.5 | 7.8 | 7.2 | 7.6 | 7.8 | 7.8 | 7.6 | 7.8 | |
| Three-month shrinkage reduction ratio | % | 10.0 | 10.3 | 11.5 | 11.2 | 10.0 | 11.8 | 11.5 | 18.0 | 10.3 | 13.8 | 10.0 | |
| Weaving streak defects | A/B/C | A | A | B | A | A | B | B | C | A | C | A | |
| Yarn breakage tendency | A/C | A | A | A | A | A | A | A | A | C | A | C | |

The silicone-coated polyamide 66 base fabrics used in Examples 8 and Comparative Examples 6 and 7 (hereinafter referred to as polyamide 66 base fabrics) were base fabrics that contained 10% of a silicone resin relative to the weight of the base fabric. The polyamide 66 base fabric was immersed in methanol, and the polyamide components with a polymerization degree of 5 or less were extracted and quantified to be 0.9 wt%.

In Examples 8 and Comparative Examples 6 and 7, the YI (ASTM E313) values were used to evaluate the coloring of the recycled polyamide compositions. The specific analytical method is described below.

### <Spectrophotometer>

Measurement apparatus: SD5000 (Nihon Denko Kogyo Co., Ltd.)
Light source: D65/10

The numerical values were determined according to ASTM E313.

### [Example 8]

In a 300 mL glass bottle with a stirrer, 10 g of the polyamide 66 base fabric was placed in a polyethylene-made mesh bag, and 100 g of the 20 wt% calcium chloride methanol solution was added. The mixture was placed in a water bath at 60°C and stirred for 12 hours using a magnetic stirrer to dissolve the polyamide (polyamide 66) contained in the polyamide 66 base fabric, thereby obtaining a mixture of the polyamide solution (polyamide 66 solution) and the silicone resin. The mixture of the polyamide solution and the silicone resin was passed through stainless steel mesh with an opening size of 1 mm and stainless steel mesh with an opening size of 500 µm to remove the silicone resin. The removed silicone resin was returned to the 300 mL glass bottle, washed with 5 g of the 20 wt% calcium chloride methanol solution, and then separated from the polyamide solution (washing liquid after the washing) through the stainless steel mesh. The entire recovered polyamide solution was placed into a 1000 mL beaker, and 500 g of methanol was added while stirring to obtain polyamide (polyamide 66) solid precipitates. The solid precipitates were filtered and recovered using a 1 µm membrane filter. The filtered solid precipitates were thoroughly washed with water. The washed solid precipitates were heated and dried in a vacuum dryer at 40°C to obtain 8.8 g (with a yield of 97.8%) of a recycled polyamide composition (recycled polyamide 66 composition).

The resulting recycled polyamide composition was analyzed by X-ray fluorescence analysis and was found to contain 400 ppm silicon atoms and 300 ppm calcium atoms. The content of polyamide components with a polymerization degree of 5 or less was 120 ppm.

The YI of the obtained recycled polyamide composition was 6.8.

### [Comparative Example 6]

A recycled polyamide was obtained in a manner similar to Example 1, except that a polyethylene-made mesh bag was not used. The silicon atom content was 1500 ppm, the calcium atom content was 300 ppm, and the content of polyamide components with a polymerization degree of 5 or less was 130 ppm.

The YI of the obtained recycled polyamide composition was 20.

### [Comparative Example 7]

In a 300 mL glass bottle with a stirrer, 5 g of the polyamide 66 base fabric, 143.5 g of dodecane, and 7.5 g of dodecylbenzenesulfonic acid were added and stirred for 12 hours using a magnetic stirrer. When the polyamide 66 base fabric and silicone were separated, the silicone resin was peeled off from the top. The peeled polyamide base fabric was filtered and recovered using a 1 µm membrane filter. The polyamide base fabric after filtration was thoroughly washed with dodecane. After washing, the polyamide base fabric was heat dried in a vacuum dryer at 40°C, obtaining 4.3 g (with a yield of 95.5%) of a recycled polyamide composition (recycled polyamide 66 composition).

The resulting recycled polyamide composition was analyzed by X-ray fluorescence analysis and was found to contain 20000 ppm of silicon atoms, and no calcium atoms were detected. The content of polyamide components with a polymerization degree of 5 or less was 7000 ppm.

Since the coloration of the obtained recycled polyamide composition was uneven, it was again melted at 280°C and pelletized. The YI of the obtained pellets was 37.5.

### [Example 9]

Airbag process offcuts (1 kg) made of 90 wt% of polyamide 6,6 and 10 wt% of a silicone resin were cut into approximately 10 cm square pieces and evenly filled into three cylindrical containers made of polyethylene mesh, each with a diameter of 10 cm, a height of 10 cm, and an opening size of 5 mm. Next, 12 kg of methanol (manufactured by Wako Pure Chemical Industries) and 3 kg of anhydrous calcium chloride (manufactured by Wako Pure Chemical Industries) were placed into a 20 L separable flask and mixed using a mechanical stirrer to prepare a 20 wt% calcium chloride methanol solution. The cylindrical containers filled with the airbag process offcuts were immersed and stirring was performed at 60°C for 24 hours to dissolve the polyamide. After dissolution, the silicone resin as a contaminant was isolated inside the cylindrical container. The resulting polyamide solution was passed through a polyethylene-made mesh with an opening size of 500 µm by its own weight to remove a small amount of leaked silicone resin, and the solution was then dripped into 30 kg of methanol to precipitate the solids. After the precipitated solids were separated by pressure filtration, they were mixed with 20 kg of water, vacuum filtrated, and washed. After repeating the water washing five times, the resultant was vacuum dried at 80°C, recovering 800 g of the polyamide.

### [Example 10]

Airbag process offcuts (50 kg) made of 90 wt% of polyamide 6,6 and 10 wt% of a silicone resin were cut into approximately 20 cm square pieces and evenly filled into 20 cylindrical containers made of polyethylene mesh, each with a diameter of 20 cm, a height of 20 cm, and an opening size of 5 mm. Next, 480 kg of methanol (manufactured by Wako Pure Chemical Industries) and 120 kg of anhydrous calcium chloride (manufactured by Wako Pure Chemical Industries) were placed into a 1 m³ glass-lined reaction vessel and mixed using an agitator to prepare a 20 wt% calcium chloride methanol solution. The cylindrical containers filled with the airbag process offcuts were immersed and stirring was performed at 60°C for 24 hours to dissolve the polyamide. After dissolution, the silicone resin as a contaminant was isolated inside the cylindrical container. The resulting polyamide solution was subjected to pressure filtration using a polyethylene filter with an opening size of 10 µm to remove a small amount of leaked silicone resin. The filtration performance was good. Next, the filtrate was dripped into 600 kg of methanol to precipitate the solids. After the precipitated solids were separated by pressure filtration, they were mixed with 300 kg of water, vacuum filtrated, and washed. After repeating the water washing five times, the resultant was vacuum dried at 80°C, recovering 40 kg of the polyamide.

### [Example 11]

A UD tape (50 g) made of 30 wt% of a random copolymer of polyamide 6,6 and polyamide 6I and 70 wt% of carbon fibers was cut into approximately 5 cm square pieces and then filled into one cylindrical container made of polyester mesh, and an opening size of 1.5 mm, with a diameter of 5 cm and a height of 5 cm. Next, 400 g of methanol (manufactured by Wako Pure Chemical Industries, Ltd.) and 100 g of anhydrous calcium chloride (manufactured by Wako Pure Chemical Industries, Ltd.) were placed in a separable flask, and mixed using a mechanical stirrer to prepare a 20 wt% calcium chloride methanol solution. The cylindrical container filled with the UD tape process offcuts was immersed and stirring was performed at 60°C for 24 hours to dissolve the polyamide. After dissolution, the carbon fibers, as impurities, were isolated inside the cylindrical container, and no leakage outside the container was observed. The polyamide solution was dropped into 1.5 kg of a mixed solution of 50 wt% of methanol and 50 wt% of water to precipitate the solids, and the precipitated solids were separated by vacuum filtration. Further, the resultant was mixed with 1 kg of water, vacuum filtrated, and washed. After repeating the water washing five times, the resultant was vacuum dried at 80°C, recovering 10 g of the polyamide.

### [Example 12]

A tire cord (50 g) made of 95 wt% or more of a polyamide was cut into approximately 10 cm length pieces and then filled into one cylindrical container made of polyester mesh with an opening size of 0.5 mm, with a diameter of 5 cm and a height of 5 cm. Next, 400 g of methanol (manufactured by Wako Pure Chemical Industries, Ltd.) and 100 g of anhydrous calcium chloride (manufactured by Wako Pure Chemical Industries, Ltd.) were placed in a separable flask, and mixed using a mechanical stirrer to prepare a 20 wt% calcium chloride methanol solution. The cylindrical container filled with the tire cord was immersed and stirring was performed at 60°C for 24 hours to dissolve the polyamide. After dissolution, contaminants were isolated inside the cylindrical container. The resulting polyamide solution was pressure-filtered using a polyethylene filter with an opening size of 10 µm to remove the leaking contaminants. The filtration performance was good. Next, the filtrate was dropped into 600 g of methanol to precipitate the solids. After the precipitated solids were separated by pressure filtration, they were mixed with 1 kg of water, vacuum filtrated, and washed. After repeating the water washing five times, the resultant was vacuum dried at 80°C, recovering 45 g of the polyamide.

### [Example 13]

A polyamide solution was prepared from airbag process offcuts in the same manner as Example 1, except that zinc chloride was used instead of calcium chloride, recovering 800 g of the polyamide.

### [Comparative Example 8]

Airbag process offcuts (1 kg) made of 90 wt% of polyamide 6,6 and 10 wt% of a silicone resin were cut into approximately 10 cm square pieces. Next, 12 kg of methanol (manufactured by Wako Pure Chemical Industries) and 3 kg of anhydrous calcium chloride (manufactured by Wako Pure Chemical Industries) were placed into a 20 L separable flask and mixed using a mechanical stirrer to prepare a 20 wt% calcium chloride methanol solution. The cut airbag process offcuts were immersed and stirring was performed at 60°C for 24 hours to dissolve the polyamide. After dissolution, the silicone resin, as a contaminant, was finely torn. When the mixture was attempted to pass through a polyethylene-made mesh with an opening size of 5 mm under its own weight, clogging occurred, making separation impossible.

### [Comparative Example 9]

After airbag process offcuts (1 kg) made of 90 wt% of polyamide 6,6 and 10 wt% of a silicone resin were cut into approximately 10 cm square pieces, the pieces were evenly filled into three cylindrical wire mesh containers with a diameter of 10 cm, a height of 10 cm, and an opening size of 5 mm. Next, 12 kg of methanol (manufactured by Wako Pure Chemical Industries) and 3 kg of anhydrous calcium chloride (manufactured by Wako Pure Chemical Industries) were placed into a 20 L separable flask and mixed using a mechanical stirrer to prepare a 20 wt% calcium chloride methanol solution. The wire mesh filled with the airbag process offcuts was immersed. When the mechanical stirrer was turned on, a sound of contact between the wire mesh and the inner wall of the apparatus was produced. Therefore, stirring was stopped, and the containers were left to be immersed at 60°C for 24 hours. Subsequently, the polyamide dissolved according to the method described in Example 1 was precipitated, washed, and dried, yielding 90 g of the polyamide.

### INDUSTRIAL APPLICABILITY

According to the present disclosure, a polyamide composition that is less prone to clogging in the flow paths such as filters in a processing apparatus during melt processing such as melt spinning, and allows for long-term continuous operation of the processing apparatus can be provided. Furthermore, a polyamide fiber that can improve the quality of an airbag base fabric can be provided.

## Claims

1. A polyamide composition comprising a silicon compound and having a silicon atom content quantified by X-ray fluorescence analysis of 1000 ppm or less.

2. The polyamide composition according to claim 1, being a recycled polyamide composition.

3. The polyamide composition according to claim 1 or 2, wherein the silicon atom content quantified by X-ray fluorescence analysis is 30 ppm or more and 1000 ppm or less.

4. The polyamide composition according to claim 1 or 2, wherein the silicon compound comprises an organosilicon compound.

5. The polyamide composition according to claim 1 or 2, wherein a content of polyamide components with a polymerization degree of 5 or less is 10000 ppm or less.

6. The polyamide composition according to claim 1 or 2, wherein the polyamide comprises polyamide 66.

7. A manufacturing method of a polyamide composition comprising dissolving a polyamide from a silicone-coated polyamide base fabric, the dissolving being carried out using a container with a structure to prevent a part that rotates by an external driving force during the dissolution from coming in contact with the silicone-coated polyamide base fabric.

8. The manufacturing method according to claim 7, wherein the dissolution of the polyamide is carried out using a metal chloride alcohol solution.

9. A polyamide fiber having a content of polyamide components with a polymerization degree of 5 or less of 20000 ppm or less, and a silicon atom content quantified by X-ray fluorescence analysis of 50 ppm or more and 1000 ppm or less.

10. A polyamide fiber obtained from the polyamide composition according to claim 1, having a content of polyamide components with a polymerization degree of 5 or less of 20000 ppm or less, and a silicon atom content quantified by X-ray fluorescence analysis of 50 ppm or more and 1000 ppm or less.

11. The polyamide fiber according to claim 9 or 10, wherein tanδ in a dynamic viscoelastic measurement has no peak in a range of -50°C to +50°C and has a peak in a range of +90°C to +130°C, and a value of the peak of tanδ is 0.1 or more and 0.15 or less.

12. The polyamide fiber according to claim 9 or 10, being a multi-filament yarn having the following properties (1) to (7):
(1) a total fineness of 150 dtex or more and 2500 dtex or less;
(2) a strength of 6.0 cN/dtex or more and 11.0 cN/dtex or less;
(3) an elongation of 15% or more and 25% or less;
(4) a boiling water shrinkage ratio of 4.0% or more and 11.0% or less;
(5) a finish pick-up ratio of 0.5 mass% or more and 1.5 mass% or less;
(6) a filament count of 30 or more and 400 or less; and
(7) a three-month shrinkage reduction ratio of 12% or less.

13. The polyamide fiber according to claim 9 or 10, wherein the polyamide fiber comprises a polyamide 66 fiber.

14. An airbag base fabric comprising the polyamide fiber according to claim 9 or 10.

15. An airbag comprising the airbag base fabric according to claim 14.
